Europäisches Patentamt

European Patent Office

Office européen des brevets

(11) Publication number: **0 185 683**
**B1**

# EUROPEAN PATENT SPECIFICATION

(45) Date of publication of patent specification: **26.07.89**

(51) Int. Cl.⁴: **F 16 J 15/24**

(21) Application number: **85902380.6**

(22) Date of filing: **26.04.85**

(86) International application number:
**PCT/US85/00785**

(87) International publication number:
**WO 86/00120 03.01.86 Gazette 86/01**

(54) **SEGMENTED SEAL FOR ROTARY EQUIPMENT.**

(30) Priority: **08.06.84 US 618904**

(43) Date of publication of application:
**02.07.86 Bulletin 86/27**

(45) Publication of the grant of the patent:
**26.07.89 Bulletin 89/30**

(84) Designated Contracting States:
**BE DE FR GB IT NL SE**

(56) References cited:
**US-A-1 671 161**
**US-A-2 071 914**
**US-A-2 937 037**
**US-A-3 298 698**
**US-A-3 335 643**
**US-A-3 603 618**
**US-A-3 612 550**
**US-A-3 664 691**
**US-A-4 342 555**

(73) Proprietor: **NIXON, Robert J. Jr.**
**2112 - 22nd Street**
**Rock Island, IL 61201 (US)**

(72) Inventor: **NIXON, Robert J. Jr.**
**2112 - 22nd Street**
**Rock Island, IL 61201 (US)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

## Description

The present invention relates to a sealing assembly according to the preamble part of claim 1.

Grain processing and chemical industries typically have a requirement for removing moisture from raw materials, by-products and finished products. For example, brewers generate vast quantities of "brewers spent grains" which are a high moisture, high protein by-product of the brewing process. This by-product is useful in the cattle feed industry so long as the water is removed prior to feeding livestock. Consequently, cost-effective techniques of removing the moisture from such spent grains has been devised utilizing rotary steam tube dryers. Such dryers are comprised of a rotating cylindrical body having tubes disposed longitudinally therein which are charged with steam to elevate the temperature of the contents of the dryer for removing moisture therefrom by evaporation. Alternatively, the contents of the dryer are heated by direct exposure to a flame (direct fire dryer). Common to such rotary equipment is a stationary intake housing for receiving the product. The dried product exits the rotary equipment into a stationary discharge housing. Consequently, means are needed for sealing the stationary intake and discharge housings with respect to the rotating cylinder so that the product is not lost. Moreover, a pressure difference often develops between interior of the equipment and the outside atmosphere. These pressure gradients exacerbate the problem of sealing the intake and discharge ends of the equipment as they can cause either undesirable loss of product through the seal, or alternatively result in excessive intake of air which reduces efficiency of the equipment.

A sealing assembly as known from US—A—4 342 555 comprises a plurality of arcuate graphite segments surrounding the circumference of the cylinder. Between the segments circumferential gaps are created, the size of which increase as the segments move radially outward. Furthermore, since said gaps diverge in radially outward direction any wear of the radial inner sealing surfaces of said segments lead to increasing sizes of the gaps. The sealing effect achievable with said sealing assembly is insufficient.

US—A—3 335 643 discloses a slit compression ring for a piston for an internal combustion engine. In the slit part of said compression ring the ends are stepped and overlap each other. A force transmitting connection between both ends is made by an axial connector pin coupling both ends in a manner so that they can move in circumferential direction relative to each other. Any radial relative displacement of both ends is prevented by said connector pin.

Therefore, it is an object of the invention to create a sealing assembly which minimizes leakages at the axial and radial sealing zones, which accommodates wear along the axial sealing surface of the cylinder as well as run-out due to irregularities in the roundness of the cylinder, which operates at maximal sealing efficiency at a wide range of operating temperatures and accommodates concomitant wide ranging thermal expansions and contractions of the rotary equipment.

This object can be achieved with a sealing assembly as described in the preamble part of claim 1 by means of the features of the characterizing part of claim 1.

The sealing device thus designed ensures an improved sealing effect by means of overlapping end sections of adjacent segments. The radially extending gaps are sealed so that any leakages through the gaps are prevented, while the gaps allow the necessary radial and circumferential displacement of the segments in order to accommodate run-out due to irregularities in the roundness of the cylinder, furthermore accommodates concomitant wide ranging thermal expansions and contractions of the cylinder and finally minimizes the leakage of product or atmosphere at the axial and radial sealing surfaces where pressure gradients are likely to exist.

The depending claims refer to advantageous embodiments of the invention.

An embodiment of the present invention will be described in connection with the drawings. In the drawings:

Fig. 1 is an elevational view of a rotary steam tube dryer having three separate sealing assemblies;

Fig. 2 a frontal view of a seal assembly taken along line 2—2 of Fig. 1;

Fig. 3 a frontal view of a single seal segment;

Fig. 4 a rear view of the seal segment of Fig. 3;

Fig. 5 a plan view taken along line 5—5 of Fig. 4;

Fig. 6 an enlarged cross-sectional view taken along line 6—6 of Fig. 2;

Fig. 7 an enlarged cross-sectional view taken along line 7—7 of Fig. 2;

Fig. 8 an isometric view of an elastomeric sealing block; and

Fig. 9 a plan view taken along line 9—9 of Fig. 2.

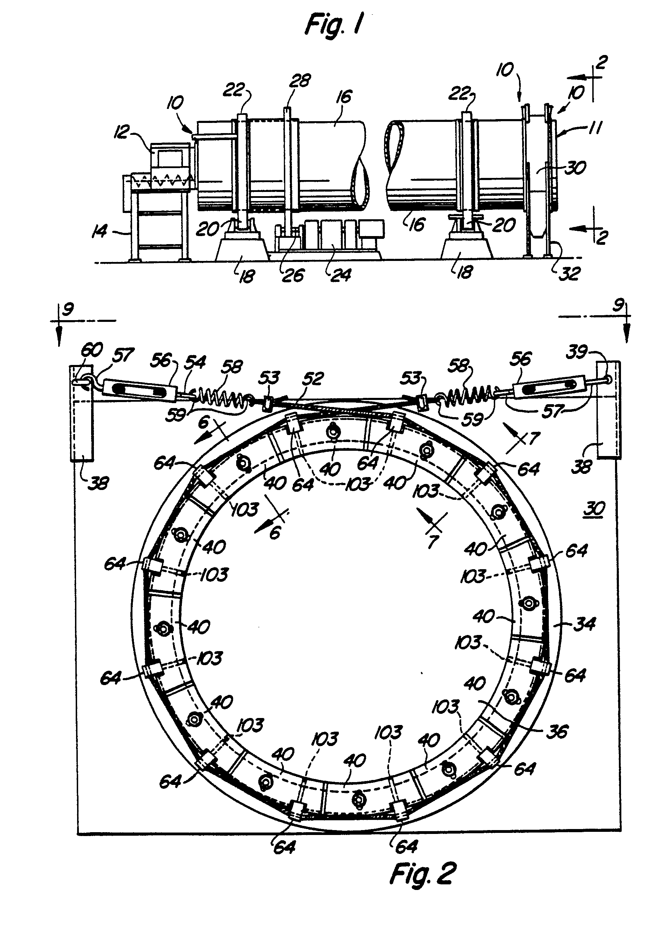

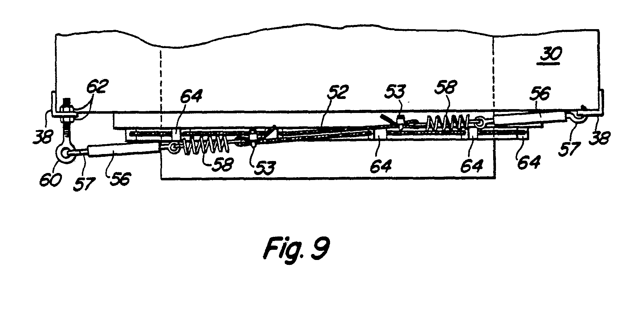

Figs. 1 to 9 illustrate seal assemblies (10) utilized in conjunction with a typical rotary steam tube dryer (11) or a direct fire dryer, a cooler or other types of rotary equipment employed in the grain processing and chemical industries for removing moisture by evaporative process or alternatively removing heat by convection, conduction and radiation. Moreover, it is anticipated that said sealing assemblies could be adapted to rotary equipment utilized in other industries such as sewage treatment and cement manufacturing.

Fig. 1 illustrates a rotary steam tube dryer (11) having an intake housing (12) in an intake housing stand (14). A rotatable cylinder (cylindrical portion or shell) (16) is interposed between the intake housing (12) and a discharge housing (30) on stand (32).

The cylinder (16) is rotatably supported by two pairs of rolls (20) on roll bases (18). Said rolls (20) are coupled to a tire (22) affixed to the cylinder (16). The cylinder is driven by a motor (24) which is coupled by a pinion gear (26) to a ring gear (28).

The equipment is utilized by rotating the shell (16) and by charging steam tubes (not shown) disposed within the interior of the shell (16). The product desired to be dried is caused to enter the intake housing (12), is then rotated within the cylinder and passes through it at a predetermined velocity for drying. The dried product then exits the cylinder (16) through openings (not shown) which are covered by the stationary discharge housing (30).

As moisture is removed from the product by evaporation due to contact with the hot steam tubes and other heated surfaces, the volume of gases within the cylinder (16) increases causing a pressure gradient with respect to the outside atmosphere. Gravity as well as the pressure gradient from the inside to the outside would cause material to be lost at the margin between the rotating cylinder (16) and housing (30) if such circumferential margin were not properly sealed. The seal disposed at the discharge housing (30) requires two separate seal assemblies (10), one distal and one proximal to the discharge end of the cylinder (16).

Additionally, a seal assembly (10) is required at the intake housing (12), to prevent waste and spillage of the product through the gap between the intake housing (12) and the intake end of the cylinder (16). Said loss is occasioned by gravitational forces and pressure gradients.

Seal assembly (10) of Fig. 2 is the assembly proximal to the discharge end of the cylinder (16). However, all seal assemblies (10) provided are identical in construction to that illustrated.

A plurality of arcuate segments (40) are circumferentially disposed about the outside circumference of the cylinder (16) affixed to a seal mounting ring (34) preferably welded to housing (30). Said ring (34) and said housing (30) are preferably made from ferrous materials to facilitate ordinary arc welding and the like.

The segments (40) are made from nonferrous material such as epoxy impregnated cloth or fiberglass. Synthane-Taylor (Philadelphia) Synthane (Registered Trade Mark) is preferably utilized. Alternatively brass, bronze, Teflon, plastic or other bearing materials may also be utilized.

Each segment (40) is mounted to the ring 34 by means of a stud (44) fixedly attached to said mounting ring (34). Each stud (44) passes through an elongated stud slot (42) in each segment (40). An elastomeric bushing (48), having washers disposed on both sides, is interposed between said segment (40) and a nut (46). Said nut (46) is adjusted such that adequate pressure is developed within bushing (48) with an axial component for providing adequate force to maintain a radial seal between the segment (40) and ring (34).

Elastomers as used herein include materials preferably selected from the group consisting of styrene-butadiene rubbers, natural rubbers, *cis*-polybutadiene rubbers, *cis*-polyisoprene rubbers, ethylene-propylene rubbers, butyl rubbers, polyacrylates, polysulfide rubbers, silicones, fluorocarbons, neoprene, nitrile rubbers, polyurethanes and other elastomers.

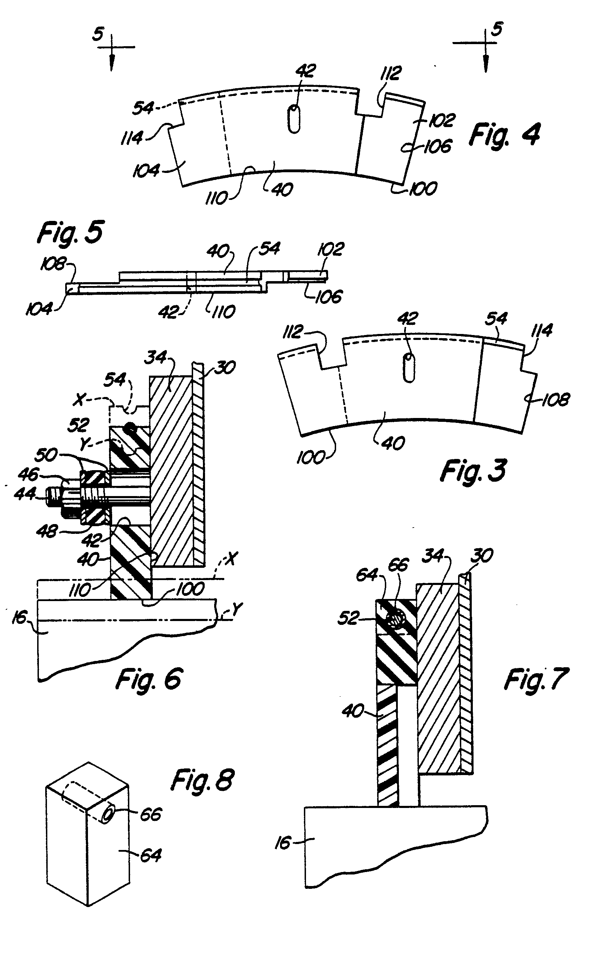

Slot (42) is aligned radially with respect to an acruate axial sealing surface (100) of the segment (40), the radius of which is approximately equal to that of the cylinder (16). The length of slot (42) allows sufficient radial displacement of the segment (40) to accommodate anticipated or measured irregularities in the roundness of the cylinder (16) as well as to accommodate wear to the seal segments (40). Fig. 6 illustrates with reference characters "X" and "Y" the relative range of travel of an out of round or "egg shaped" cylinder (16).

Each segment (40) defines a first and a second overlapping section (102, 104). Said sections preferably have a thickness of approximately one-half the thickness of the segment (40). First and second sections (102, 104), respectively, are designed to overlap the second and first sections (104, 102), respectively, of adjacent segments (40). The width of sections (102, 104) accommodates wear which results in gradual inward radial displacement of the segment (40).

Said first and second sections (102, 104), define first and second radial lap sealing surfaces (106, 108), respectively, which contact second and first radial lap sealing surfaces (108, 106), respectively, of adjacent segments (40).

First and second seal block seats (112, 114), having a square or rectangular cross section in the plane of the segment (40) are defined within each segment (40) along its outer radius. The location of said first and second seats (112, 114), is selected to align with gaps (103) formed by adjacent first and second overlap sections (102, 104) of adjacent segments (40). Disposed within each complete seal block seat formed by adjacent segments (40) and then associated first and second seal block seats (112, 114) is an elastomeric seal block (64).

Said seal block (64) has a thickness less than or equal to the thickness of segment (40). The width of block (64) provides adequate sealing of the gap (103), and does not hinder relative radial displacement of the segments (40) throughout their entire range permitted by the length of slot (42). Said width also accommodates wear along the acuate axial sealing surface (100) permitting gradual radial displacement.

A cable alignment groove (54) is defined along the outer circumference of each segment (40) for aligning a cable (52) the ends of which are attached to holes 39 and an eyebolt 60 of anchor brackets (38) through turn buckles (56) and springs (58) with hooks (57, 59) and clamps (53).

Said anchor brackets (38) are attached to the housing (30). Disposed on either side of the bracket is a nut (62) for removably attaching said eyebolt to said bracket (38) and for adjusting the distance between the eyebolt-eye and the bracket. Said adjustment ensures that the cable (52) does not contact itself at the cross-over point.

The cable (52) almost completely surrounds the seal assembly (10). The cable (52) is threaded through a cylindrical sleeve (66) passing through each seal block (64). The tension (58) of the springs (58) creates a radial component along the circumference of the seal assembly (10) which is transmitted to said seal assembly through the seal blocks (64).

Said cable tension has a two-fold purpose. First, it serves to ensure that each segment (40) has an adequate radial force to ensure that said segment (40) is properly seated against the surface of the cylinder (16). Second, said radial force ensures that each gap (103) is properly sealed by its associated sealing block (64) to perfect a complete axial seal.

The elastomeric bushing (48) could be substituted by a spring or the like.

The number of segments (40) can vary depending upon the outside dimension of the cylinder. For instance, larger cylinders require a greater number of segments than smaller ones. Where small deviations in the roundness of the cylinder (16) are expected, however, fewer arcuate segments having a concomitantly longer cord length may be utilized as anticipated displacement of the segments is reduced.

Finally, where additional seal capability is required, the axial and radial sealing surfaces can be greased. Such application of lubricant further enhances the seal's ability to withstand pressure gradients as well as lubricates the axial and radial surfaces which are subject to wear.

## Claims

1. A sealing assembly (10) for effecting a seal between a stationary housing (12, 30) and a rotatable cylinder (16), said sealing assembly (10) having a plurality of arcuate segments (40) radially disposed about the outer circumference of the cylinder (16), each segment having an axial sealing surface (100) defining a radius approximately equal to that of the rotatable cylinder (16), said sealing assembly being provided with means (52) for tensioning the segments (40) radially about the outside circumference of the cylinder (16), and further provided with means (44) for removably attaching each segment (40) to said housing (30) while concurrently permitting radial displacement of each segment (40) independently from its adjacent segments, characterized in that each segment (40) is provided with two circumferentially opposite end sections (102, 104), that said end sections (102, 104) of adjacent circumferentially disposed segments (40) overlap each other creating a radially extending, axially open gap (103) and a radial sealing interface between said adjacent segments (40), and that means (64) are provided for sealing the gaps (103) formed by the adjacent overlapping segments (40).

2. A sealing assembly according to Claim 1, characterized in that each end section (102, 104) defines a radial lap surface (106, 108) beginning at a radially extending shoulder and ending at a radially extending end surface of said segment (40), both radial lap surfaces (106, 108) facing to opposite axial directions, that the axial thickness of each end section (102, 104) is approximately one half the thickness of the segment (40) between both end sections, that said overlapping end sections (102, 104) of two circumferentially adjacent segments (40) contact each other with said radial lap surfaces (106, 108) and that the radial gap (103) is formed between one shoulder and one end surface of two adjacent segments (40).

3. Sealing assembly according to Claims 1 and 2, characterized in that circumferentially spaced apart first and second seats (112, 114) are cut out in a radial outer surface of each segment (40) in radial alignment with one of said shoulders and one of said end surfaces of said segment (40) respectively, that with overlapping end sections (102, 104) said first and second seats (112, 114) are in axial registration, and that said means (64) for sealing said gap (103) is formed by an elastomeric seal block being fitted into said registered first and second seats (112, 114).

4. A sealing assembly according to Claim 3, characterized in that said first and second seats (112, 114) have square or rectangular cross section in the plane of said segment (40), and that said elastomeric block has an axial thickness less than or equal to the axial thickness of said segment (40).

5. A sealing assembly according to one of Claims 1—4, wherein said means (52) for tensioning said segment (40) is a cable (52) almost completely surrounding said sealing assembly (10), characterized in that the cable (52) engages each segment (40) in an outwardly open cable alignement groove (54), and that said cable (52) is threaded through a cylindrical sleeve (66) passing through each of said sealing block, said sleeve (66) being provided in a radially elevated position in relation to said radial outer surface of said segment (40), in order to transmit radial components created by the tension in said cable (52) to said sealing assembly (10) via said sealing blocks.

6. A sealing assembly according to Claim 1, characterized in that said means (44) for mounting said segment (40) to said housing (30) is a stud secured to a seal mounting ring (32) of said housing (30), that spring means (48) on said stud maintain an axial sealing contact between said segment (40) and said ring (32), and that said radial gap (103) sealed by said sealing block is axially opened toward said ring (32).

## Patentansprüche

1. Dichtvorrichtung (10) zum Herstellen einer Abdichtung zwischen einem stationären Gehäuse (12, 30) und einem drehbaren Zylinder (16), mit einer Vielzahl bogenförmiger Segmente (40), die um den äußeren Umfang des Zylinders (16) radial verteilt sind und deren jedes eine axiale Dichtfläche (100) aufweist, die einen im wesentlichen dem Radius des drehbaren Zylinders (16) gleichen Radius definiert, mit Mitteln (52) zum radialen Spannen der Segmente (40) gegen den außenseitigen Umfang des Zylinders (16) und mit Mitteln (44) zum abnehmbaren Befestigen jedes Segmentes (40) am Gehäuse (30) derart, daß jedes Segment unabhängig von den ihm benachbarten Segmenten (40) radiale Versetzbewegungen auszuführen vermag, dadurch gekennzeichnet, daß an jedem Segment (40) zwei in Umfangsrichtung entgegengesetzte Endabschnitte (102, 104) vorgesehen sind, daß die Endabschnitte (102, 104) der in Umfangsrichtung des Zylinders (16) benachbart angeordneten Segmente (40) einander überlappen, daß zwischen jeweils zwei benachbarten Segmenten (40) wenigstens ein radial verlaufender, axial offener Spalt (103) und eine radiale Dicht-überlappungszone gebildet sind, und daß Mittel (64) zum Abdichten der Spalte (103) zwischen den benachbarten und sich mit ihren Endabschnitten (102, 104) überlappenden Segmenten (40) vorgesehen sind.

2. Dichtvorrichtung nach Anspruch 1, dadurch gekennzeichnet, daß jeder Endanschnitt (102, 104) eine radiale Überlappfläche (106, 108) aufweist, die an einer radial verlaufenden Schulter des Segments beginnt und an einer radial verlaufenden Endfläche des Segmentes (40) endet, daß die beiden radialen Überlappungsflächen (106, 108) in einander entgegengesetzte axiale Richtungen weisen, daß die axiale Dicke jedes Endabschnittes (102, 104) annähernd der halben axialen Dicke des Segmentes (40) zwischen den beiden Endabschnitten (102, 104) entspricht, daß die überlappenden Endabschnitte (102, 104) zweier in Umfangsrichtung benachbarter Segmente (40) einander mit den radialen Überlappungsflächen (106, 108) berühren, und daß der radiale Spalt (103) zwischen einer Schulter und einer Endfläche zweier benachbarter Segmente (40) gebildet wird.

3. Dichtvorrichtung nach den Ansprüchen 1 und 2, dadurch gekennzeichnet, daß in einer radial äußeren Oberfläche jedes Segmentes (40) in Umfangsrichtung beabstandete erste und zweite Sitze (112, 114) ausgeschnitten sind, die mit einer der Schultern und einer der Endflächen der Segmente (40) in radialer Ausrichtung stehen, daß bei überlappenden Endabschnitten (102, 104) der beiden benachbarten Segmente (40) die ersten und zweiten Sitze (112, 114) aufeinander ausgerichtet sind, und daß die Mittel (64) zum Abdichten des Spaltes (103) durch einen elastomeren Dichtblock (64) gebildet sind, der in die aufeinander ausgerichteten ersten und zweiten Sitze (112, 114) eingepaßt ist.

4. Dichtvorrichtung nach Anspruch 3, dadurch gekennzeichnet, daß die ersten und zweiten Sitze (112, 114) einen quadratischen oder rechteckigen Querschnitt in der Ebene des Segments (40) besitzen, und daß der elastomere Block eine axiale Dicke aufweist, die kleiner oder gleich der axialen Dicke des Segmentes (40) ist.

5. Dichtvorrichtung nach Anspruch 1, wobei die Mittel (52) zum radialen Spannen der Segmente (40) ein Kabel (52) aufweisen, das die Dichtvorrichtung nahezu vollständig umschlingt, dadurch gekennzeichnet, daß das Kabel (52) an jedem Segment (40) in einer nach außen offenen Kabelausrichtnut (54) angreift, und daß das Kabel (52) durch eine zylindrische Büchse (66) geführt ist, die jeden Dichtblock durchsetzt, wobei die Büchse (66) relativ zur radial äußeren Fläche des Segmentes (40) in einer radial angehobenen Position liegt, um radiale Komponenten aus der Spannung im Kabel (52) auf die Dichtvorrichtung (10) über den Dichtblock (64) zu übertragen.

6. Dichtvorrichtung nach Anspruch 1, dadurch gekennzeichnet, daß die Mittel (44) zum Befestigen des Segmentes (40) am Gehäuse (30) ein an einem Befestigungsring (32) angebrachter Schraubbolzen ist, daß der Befestigungsring (32) am Gehäuse (30) angebracht ist, daß Federmittel (48) auf dem Schraubbolzen einen axialen Dichtkontakt zwischen dem Segment (40) und dem Ring (32) aufrechterhalten, und daß der radiale Spalt (103), der durch den Dichtblock verschlossen ist, sich axial zum Ring (32) hin öffnet.

## Revendications

1. Dispositif d'étanchéité (10) destiné à réaliser un joint étanche entre un bâti fixe (12, 30) et un cylindre rotatif (16), ledit dispositif d'étanchéité (10) comportant plusieurs segments incurvés (40) disposés radialement le long de la circonférence extérieure du cylindre (16), chaque segment ayant une surface axiale (100) d'étanchéité définissant un rayon approximativement égal à celui du cylindre rotatif (16), ledit dispositif d'étanchéité étant muni de moyens (52) destinés à tendre les segments (40) radialement autour de la circonférence extérieure du cylindre (16), et étant en outre muni de moyens (44) destinés à relier de façon amovible chaque segment (40) audit bâti (30) tout en permettant en même temps un déplacement radial de chaque segment (40) indépendamment de ses segments adjacents, caractérisé en ce que chaque segment (40) est muni de deux sections extrêmes circonférentiellement opposées (102, 104), en ce que lesdites sections extrêmes (102, 104) de segments adjacents, disposés circonférentiellement (40), se recouvrent mutuellement, engendrant un intervalle ouvert axialement, s'étendant radialement (103) et une interface radiale d'étanchéité entre lesdits segments adjacents (40), et en ce que des moyens (64) sont prévus pour obturer de façon étanche les intervalles (103) formés par les segments adjacents (40) se recouvrant.

2. Dispositif d'étanchéité selon la revendication 1, caractérisé en ce que chaque section extrême (102, 104) définit une surface radiale (106, 108) de recouvrement commençant à un épaulement s'étendant radialement et finissant à une surface extrême s'étendant radialement dudit segment (40), les deux surfaces radiales (106, 108) de recouvrement étant tournées dans des directions axiales opposées, en ce que l'épaisseur axiale de chaque section extrême (102, 104) est approximativement la moitié de l'épaisseur du segment (40) entre les deux sections extrêmes, en ce que lesdites sections extrêmes (102, 140) se recouvrant de deux segments circonférentiellement adjacents (40) sont en contact mutuel avec lesdites surfaces radiales de recouvrement (106, 108), et en ce que l'intervalle radial (103) est formé entre un épaulement et une surface extrême de deux segments adjacents (40).

3. Dispositif d'étanchéité selon les revendications 1 et 2, caractérisé en ce que des premier et second sièges (112, 114), espacés circonférentiellement, sont usinés dans une surface radiale extérieure de chaque segment (40) en alignement radial avec l'un desdits épaulements et l'une desdites surfaces extrêmes dudit segment (40), respectivement, en ce que les sections extrêmes (102, 104) en recouvrement desdits premier et second sièges (112, 114) sont en repérage axial, et en ce que lesdits moyens (64) destinés à fermer de façon étanche ledit intervalle (103) sont formés par un bloc élastomérique d'étanchéité ajusté dans lesdits premier et second sièges repérés (112, 114).

4. Dispositif d'étanchéité selon la revendication 3, caractérisé en ce que lesdits premier et second sièges (112, 114) ont une section transversale carrée ou rectangulaire dans le plan dudit segment (40), et en ce que ledit bloc élastomérique présente une épaisseur axiale inférieure ou égale à l'épaisseur axiale dudit segment (40).

5. Dispositif d'étanchéité selon l'une des revendications 1—4, dans lequel lesdits moyens (52) destinés à tendre ledit segment (40) comprennent un câble (52) qui entoure presque complètement ledit dispositif d'étanchéité (10), caractérisé en ce que le câble (52) est en prise avec chaque segment (40) dans une gorge (54) d'alignement de câble ouverte vers l'extérieur, et en ce que ledit câble (52) est passé dans un manchon cylindrique (66) passant à travers chacun desdits blocs d'étanchéité, ledit manchon (66) étant prévu dans une position élevée radialement par rapport à ladite surface radiale extérieure dudit segment (40) afin de transmettre des composantes radiales engendrées par la tension dans ledit câble (52) audit dispositif (10) d'étanchéité par l'intermédiaire desdits blocs d'étanchéité.

6. Dispositif d'étanchéité selon la revendication 1, caracatérisé en ce que lesdits moyens (44) destinés à monter ledit segment (40) sur ledit bâti (30) comprennent un goujon fixé à une bague (32) de montage de joint d'étanchéité dudit bâti (30), en ce qu'un moyen à ressort (48) sur ledit goujon maintient un contact axial d'étanchéité entre ledit segment (40) et ladite bague (32), et en ce que ledit intervalle radial (103) fermé par ledit bloc d'étanchéité est ouvert axialement vers ladite bague (32).

## Fig. 1

## Fig. 2

1

Fig. 4

Fig. 5

Fig. 3

Fig. 6

Fig. 7

Fig. 8

2

**Fig. 9**